# DEMANDE DE BREVET EUROPEEN

(11) **EP 1 555 623 A2**
(43) Date de publication de la demande: **20.07.2005**
(21) Numéro de dépôt: 05290092.5
(22) Date de dépôt: 14.01.2005
(51) Int. Cl.: G06F 17/24, G06F 3/12, G06K 15/00

(54) **Procédé d'insertion de marques de pliage sur un document lors de son impression et système d'impression associé**

(30) Priorité: 15.01.2004 FR 0400343
(71) Demandeur: Sagem SA, 75512 Paris Cedex 15 (FR)
(72) Inventeur: Ferreri, Jean-Thomas, 95800 Cergy Saint Christophe (FR)
(74) Mandataire: Debay, Yves

(57) **Abrégé**

La présente invention concerne un procédé d'impression de marques de pliage, réalisé dans un système d'exploitation comprenant un moyen d'édition (1) d'au moins un document, un système d'impression (3) et un moyen d'interfaçage graphique (2), le système d'impression (3) comportant au moins un pilote (5) dédié à une imprimante et un module de supervision () de l'impression, le procédé étant caractérisant en ce qu'il comprend entre autres les étapes suivantes :
- une étape d'activation et de paramétrage d'une option d'insertion de marques de pliage réalisée par un module de gestion de l'option insertion de marques de pliage (6 - 7),
- une étape d'insertion de marques de pliage dans le deuxième document intermédiaire.

## Description

### DOMAINE TECHNIQUE DE L'INVENTION

La présente invention concerne un procédé d'insertion de marques de pliage lors de l'impression d'un document et le système utilisé pour réaliser ledit procédé.

### ARRIERE-PLAN TECHNOLOGIQUE DE L'INVENTION

Actuellement pour insérer un document imprimé dans une enveloppe, il faut plier la feuille manuellement et approximativement au bon format de l'enveloppe pour l'y insérer. Ce pliage manuel peut s'avérer fastidieux dès qu'un utilisateur doit plier feuille par feuille, par exemple, une centaine de feuilles lors d'un publipostage. Il est connu dans l'art antérieur certains logiciels permettant de faciliter le pliage de feuille en imprimant sur les documents à plier des marques de pliage. Par exemple, le logiciel Publisher permet de faire des marques de pliage pour réaliser des avions en papier. Cependant ces logiciels ont l'inconvénient de ne pas être compatibles avec tous les logiciels d'édition de documents et également toutes les imprimantes susceptibles d'imprimer ces documents.

Il est connu par le document WO 95/00898 un système informatique pour contrôler un dispositif d'impression de manière à générer en sortie d'impression un format déterminé. Toutefois, il n'est pas permis selon ce système une adaptation à tout type de moyen d'édition ; en effet le système informatique prévoit des modules de traitement supplémentaires uniquement adaptés pour traiter des informations générées par un programme d'application spécifique qui fonctionne de préférence en langage orienté objet.

### DESCRIPTION GENERALE DE L'INVENTION

La présente invention a donc pour but de pallier certains inconvénients de l'art antérieur en proposant un procédé d'insertion de marques de pliage lors de l'impression d'un document, réalisé par un système d'impression, accessible par toutes les applications logicielles d'édition.

Ce but est atteint par un procédé d'impression de marques de pliage, réalisé dans un système d'exploitation comprenant un moyen d'édition d'au moins un document, un système d'impression et un moyen d'interfaçage graphique, le système d'impression comportant au moins un pilote dédié à une imprimante et un module de supervision de l'impression, le procédé comprenant les étapes suivantes :
- une première étape de réglage et de validation des paramètres propriétaires d'une imprimante par l'intermédiaire d'un moyen de paramétrage d'une imprimante, situé dans le pilote de l'imprimante et en liaison avec un moyen de saisie des paramètres standards et de l'activation d'une impression du moyen d'édition,
- une deuxième étape consistant en une première conversion, par un moyen d'interfaçage graphique, du document à imprimer en un fichier intermédiaire suivant un format graphique de type EMF ou bitmap, la première conversion ne prenant pas en compte les paramètres de l'imprimante,
- une troisième étape de mémorisation et de mise en file d'attente du premier fichier intermédiaire dans un moyen de mémorisation du moyen de gestion de l'impression du système d'impression,
- une quatrième étape de détection de la position du premier fichier intermédiaire en tête de la file d'attente du moyen de mémorisation,
- une cinquième étape consistant en une deuxième conversion du premier fichier intermédiaire en un deuxième fichier intermédiaire suivant un format universel de type PCL ou Postscript, prenant en compte les paramètres de l'imprimante, ladite étape étant réalisée par le moyen d'interfaçage graphique en collaboration avec un moyen de génération de flux de données du pilote de l'imprimante,
- une sixième étape d'interprétation du flux de données du deuxième fichier intermédiaire par un moyen d'interprétation du moyen de gestion de l'impression, et
- une septième étape d'envoi des flux de données interprétés vers un moyen d'interfaçage d'une imprimante,
le procédé étant caractérisé en ce qu'il comprend les étapes suivantes :
- une étape d'activation et de paramétrage d'une option d'insertion de marques de pliage réalisée par un module de gestion de l'option d'insertion de marques de pliage,
- une étape d'insertion de marques de pliage dans le deuxième document intermédiaire.

Selon une autre particularité, l'étape d'activation et de paramétrage d'une option d'insertion de marques de pliage est effectuée lors de la première étape de réglage et de validation des paramètres de propriétés de l'imprimante dans le moyen de saisie des paramètres de l'imprimante et de l'activation d'une impression du moyen d'édition.

Selon une autre particularité, l'étape d'insertion de marques de pliage est réalisée dans le moyen de supervision du pilote de l'imprimante lors de l'étape de conversion du premier fichier intermédiaire en un deuxième fichier intermédiaire.

Selon une autre particularité, l'étape d'activation et de paramétrage d'une option d'insertion des marques de pliage est réalisée indépendamment et en parallèle aux étapes de réglage et de validation des paramètres de propriétés d'une imprimante, d'une première conversion du document à imprimer en un fichier intermédiaire, de mémorisation et de mise en file d'attente du premier fichier intermédiaire dans un moyen de mémorisation et de détection de la position du premier fichier intermédiaire en tête de la file d'attente.

Selon une autre particularité, l'étape d'insertion de marques de pliage est réalisée après l'étape de conversion du premier fichier intermédiaire en un deuxième fichier intermédiaire converti en un format universel.

Selon une autre particularité, l'insertion de marques de pliage nécessite d'abord une étape de détection des données de mise en page du deuxième fichier intermédiaire et une étape de modification dudit fichier par insertion des marques de pliage.

Un autre but de l'invention est de proposer un système d'impression de marques de pliage comprenant un moyen d'édition d'au moins un document, un système d'impression et un moyen d'interfaçage graphique, le système d'impression comportant au moins un pilote dédié à une imprimante et un module de gestion de l'impression, le système d'impression étant caractérisé en ce qu'il comprend un module d'activation et de réglage de l'option marque de pliage.

Selon une autre particularité, le module d'activation et de réglage de l'option marque de pliage comprend un moyen de paramétrage des paramètres de marques de pliage et un moyen de supervision de l'insertion des marques de pliage.

Selon une autre particularité, le module d'activation et de réglage de l'option marque de pliage est intégré dans le pilote de l'imprimante.

Selon une autre particularité, le module d'activation et de réglage de l'option marque de pliage n'est pas intégré dans le pilote de l'imprimante, le moyen de supervision de l'insertion de marques de pliage ayant un lien avec le module de supervision de la gestion de l'impression du moyen de gestion de l'impression.

Selon une autre particularité, le module d'activation et de réglage de l'option marque de pliage est un logiciel.

Selon une autre particularité, le module de supervision de la gestion de l'impression du moyen de gestion de l'impression est un spooler permettant la gestion de file d'attente des documents à imprimer.

### BREVE DESCRIPTION DES DESSINS

D'autres particularités et avantages de la présente invention apparaîtront plus clairement à la lecture de la description ci-après, faite en référence aux dessins annexés, dans lesquels :
- la figure 1 montre un schéma représentatif du système d'impression de marques de pliage selon un premier mode de réalisation de l'invention,
- la figure 2 montre un schéma représentatif du système d'impression de marques de pliage selon un deuxième mode de réalisation de l'invention,
- la figure 3 montre un schéma fonctionnel représentatif du procédé d'impression de marques de pliage selon le premier mode de réalisation de l'invention,
- la figure 4 montre un schéma fonctionnel représentatif du procédé d'impression de marques de pliage selon le deuxième mode de réalisation de l'invention,
- la figure 5 montre un schéma fonctionnel représentatif d'un procédé d'impression connu.

### DESCRIPTION DES MODES DE REALISATION PREFERES DE L'INVENTION

Le système d'impression de marques de pliage a pour objectif d'obtenir, lors de l'impression d'un document édité par un logiciel d'édition de type traitement de texte, des marques de pliage pouvant être tracées par exemple dans les marges dudit document et représentées, par exemple, par un ou des segments fins de couleur gris clair. L'un des avantages de ce système présenté dans le premier mode de réalisation dudit système d'impression de marques de pliage est qu'il est accessible par toutes les applications d'un système d'exploitation, telles que les applications logicielles du système d'exploitation de Windows par exemple Word, Excel, Photoshop... Un autre but est de réaliser l'impression des marques de pliage sur toutes les imprimantes connectées à l'ordinateur exécutant le procédé d'impression de marques de pliage.

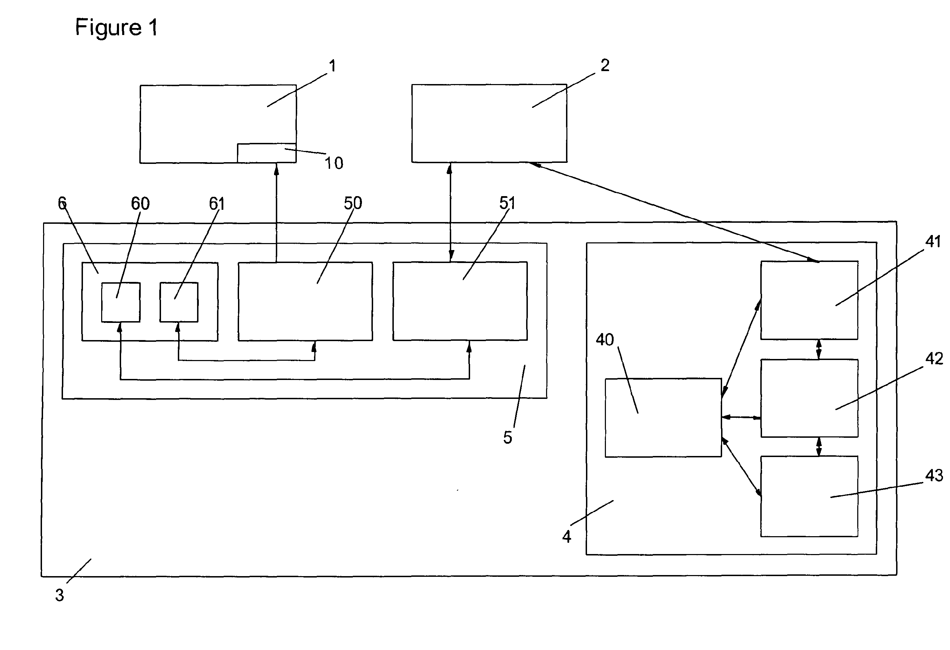

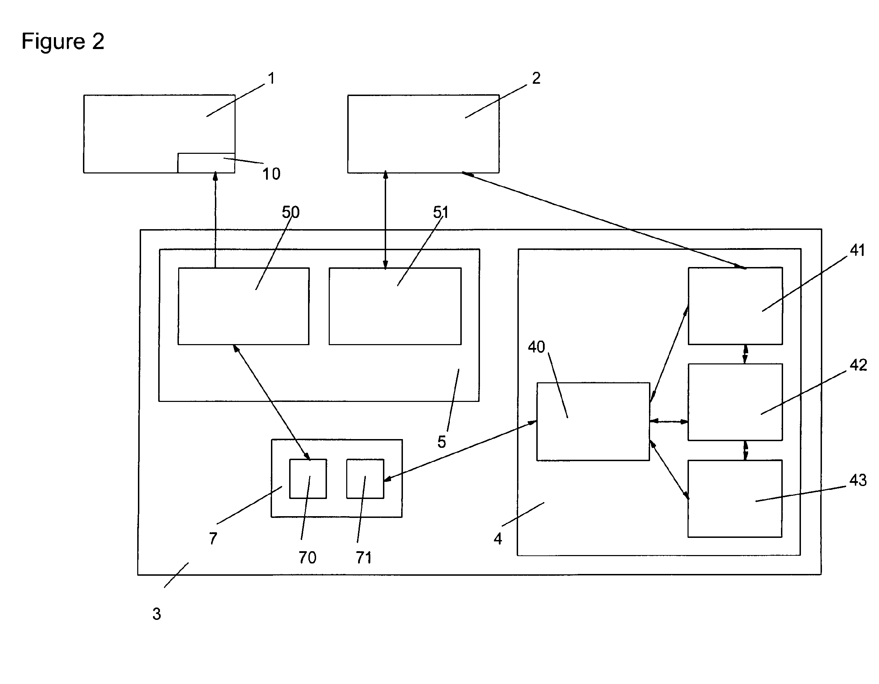

Le système d'impression de marques de pliage va être maintenant décrit en référence aux figures 1 et 2.

Pour une meilleure compréhension de l'invention, il est décrit ci-après un mode connu d'impression de documents à partir d'une application logicielle d'édition active sur un système d'exploitation.

Le système d'exploitation d'un ordinateur comprend au moins un moyen d'édition (1) d'un document actif, un moyen d'interfaçage graphique (2) et un système d'impression (3). Le moyen d'édition (1) peut être une application logicielle de traitement de texte, telle que par exemple sous le système d'exploitation Windows (marque déposée) le traitement de texte Word. Le moyen d'édition (1) comprend entre autres un moyen de saisie de paramètres d'impression (10) comportant plus particulièrement un moyen de saisie des paramètres de propriétés d'au moins une imprimante connectée à l'ordinateur. Les paramètres de propriétés d'une imprimante sont par exemple le sens d'orientation d'une page à imprimer dans l'imprimante (paysage ou portrait), l'impression du document en couleur ou non, une impression en brouillon, etc. Le moyen d'interfaçage graphique (2) permet de convertir, par exemple, un fichier document de format type Word ou .doc en fichiers intermédiaires d'impression en format image de type EMF (Enhanced Metafile), Bitmap, PCL (Printer Control Language) ou postscript. Le moyen d'interfaçage graphique (2) peut être, par exemple, sous le système d'exploitation de type GDI (Graphics Device Interface). Le système d'impression (3) comprend au moins un pilote (5) dédié à une imprimante connectée sur l'ordinateur et un moyen de gestion de l'impression (4). Le pilote (5) de l'imprimante comprend un moyen de paramétrage des propriétés de l'imprimante (50) et un moyen de génération de flux de données (51) représentatif des caractères ou pixels du document à imprimer, les flux de données étant interprétables par l'imprimante. Le moyen de paramétrage des propriétés de l'imprimante (50) est en relation avec le moyen de saisie des paramètres de propriétés de l'imprimante (10) présent dans le moyen d'édition (1), sous forme, par exemple, d'onglets présents dans la fenêtre de saisie des paramètres d'impression standard du logiciel d'édition. Le moyen de gestion d'une impression (4) comprend un moyen de mémorisation (41) des documents à imprimer, un moyen de supervision de l'impression (40), un interpréteur des flux de données (42) et un moyen d'interfaçage direct vers l'imprimante (43). Le moyen de supervision de l'impression (40) permet de gérer la gestion d'une file d'attente du moyen de mémorisation (41). La gestion de la file d'attente peut être réalisée soit suivant l'ordre d'arrivée des fichiers d'impression, soit suivant leur priorité, soit suivant les deux. L'interpréteur des flux de données (42) permet d'interpréter le langage de la description d'une page à imprimer. Ce langage peut être vectoriel ou par pixel.

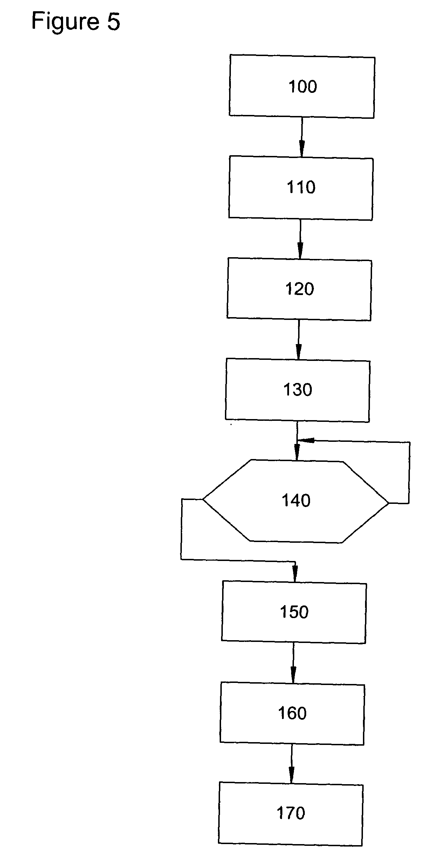

La figure 5 représente le procédé de fonctionnement de l'impression d'un document connu par un système d'impression d'un PC. Un utilisateur souhaite imprimer le document qu'il a édité dans un logiciel par exemple de traitement de texte de type word. Pour cela, il règle par le moyen de saisie de l'impression (10) les paramètres standard d'une impression tels que le nombre de pages à imprimer, le choix des pages à imprimer, il peut également choisir le type d'imprimante sur lequel il veut que l'impression soit exécutée. L'utilisateur peut également paramétrer les propriétés de l'imprimante, connectée à l'ordinateur, à partir du moyen de saisie des paramètres de propriétés de l'imprimante (non représentés). Une première étape (100) du procédé connu consiste en la validation des paramètres d'impression et le lancement de la commande d'impression. En deuxième étape (110), le document à imprimer est envoyé vers l'interface graphique. L'interface graphique, à l'étape (120), va convertir le document word, par exemple, en un fichier intermédiaire au format image de type EMF ou bitmap. L'étape de conversion prend en compte le paramétrage standard de l'impression et non celui de l'imprimante. Puis le fichier intermédiaire est, à l'étape (130), mémorisé et mis en file d'attente dans le moyen de mémorisation du moyen de gestion du système d'impression. Le moyen de supervision (40) du moyen de gestion de l'impression (4) contrôle la file d'attente, à l'étape (140). Dès que le moyen de supervision (40) détecte le fichier intermédiaire d'impression positionné en tête de la file d'attente du moyen de mémorisation (41), il en informe l'interface graphique (2) qui va récupérer le fichier intermédiaire, à l'étape (150) et va, à nouveau, réaliser une conversion associée à une génération de flux de données en collaboration avec le générateur de flux de données (51) du pilote de l'imprimante (5). Un deuxième fichier intermédiaire est créé sous un format universel de type PCL ou Postscript ou autre. Ce fichier intermédiaire comprend les paramètres de propriétés de l'imprimante. Puis à l'étape (160), ce fichier est envoyé vers l'interpréteur (42) du moyen de gestion de l'impression (4), qui interprète le fichier flux de données et envoie directement le fichier flux de données intermédiaire interprété vers l'interface de l'imprimante (43), à l'étape (170).

La présente invention va être à présent décrite en relation avec les figures 1, 2, 3 et 4. L'invention fonctionne à partir d'un système équivalent à celui décrit ci-avant. L'invention peut se décliner en deux modes de réalisation distincts. Un premier mode de réalisation du procédé d'impression de marques de pliage de la présente invention est accessible par tout logiciel d'édition, cependant l'impression des marques est spécifique à un seul type d'imprimante connu de la requérante. Un second mode de réalisation du procédé d'impression de marques de pliage de la présente invention est accessible par tout logiciel d'édition, les marques d'impression étant imprimables par toute imprimante utilisant un langage de commande standard de type PLC ou Postscript.

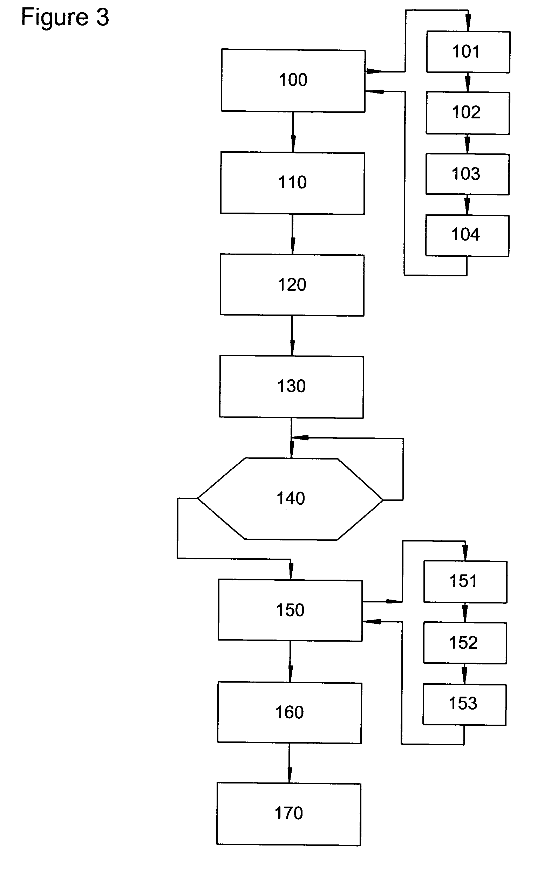

Le premier mode de réalisation de l'invention va être à présent décrit en fonction des figures 1 et 3. La figure 1 représente le système d'impression de marques de pliage selon le premier mode de réalisation. Le fonctionnement de ce système est très similaire au fonctionnement du système présenté en figure 5. Un moyen de gestion des marques de pliage (6) est inséré dans le pilote de l'imprimante (5). Ce moyen de gestion de marques de pliage (6) comprend un moyen de paramétrage des marques de pliage (61) et un moyen de supervision de l'insertion de marques de pliage (60). Les paramètres de marques de pliage représentent, par exemple, la position des segments dans une marge de la page à imprimer permettant de plier cette dernière pour l'insérer dans une enveloppe d'un format particulier. Le moyen de paramétrage des marques de pliage (61) prend en compte le réglage des différents paramètres des marques de pliage. Dans ce mode de réalisation, ces paramètres sont spécifiques à l'imprimante et peuvent être saisis dans le moyen de saisie des paramètres des propriétés de l'imprimante, sous forme d'un onglet situé dans la fenêtre de paramétrage des propriétés de l'imprimante dans le logiciel d'édition. Le moyen de paramétrage des marques de pliage (61) peut être relié, voir même inséré, au moyen de paramétrage des propriétés de l'imprimante (50). Le moyen d'activation (60) de l'insertion des marques de pliage prend en compte la validation de l'insertion des marques de pliage et communique avec le moyen de génération de flux de données (51). Un espace mémoire peut être dédié dans le moyen de mémorisation du moyen de gestion de l'impression, ledit espace mémoire comprenant les différents paramétrages de marques de pliage à insérer dans le document à imprimer.

La figure 3 représente le fonctionnement du procédé d'impression de marques de pliage selon le premier mode de réalisation. Les premières étapes (101, 102) concernent le réglage des paramètres des marques de pliage et l'activation de l'insertion des marques de pliage lors de l'impression Un utilisateur va donc sélectionner l'option marque de pliage à partir du moyen de saisie des paramètres d'impression de l'application logicielle, de type « word » par exemple. Plus particulièrement la sélection est effectuée dans le moyen de saisie (1) des paramètres correspondant à l'imprimante connectée à l'ordinateur. L'utilisateur valide sa sélection qui est automatiquement prise en compte par le moyen de paramétrage des marques de pliage du moyen de gestion des marques de pliage à l'étape (103). Le moyen de supervision de l'insertion des marques de pliage (60) prend en compte l'activation de l'option marque de pliage, à l'étape (104). Les étapes (110 à 140) sont identiques aux étapes décrites à la figure 5. Lors de l'étape (150) de conversion du premier fichier intermédiaire de format image de type bitmap, le moyen de supervision de l'insertion des marques de pliage (60) transmet l'état d'activation de l'option et les paramètres sélectionnés au moyen de génération de flux de données du pilote à l'étape (151). Le moyen de génération de flux de données (51) prend en compte les informations du moyen de supervision (60), étape (152), et insère, à l'étape (153), les données relatives à la position et à la forme des marques de pliage dans le fichier intermédiaire avant ou en même temps que la conversion et la génération de flux de données soient exécutées. Par exemple, le générateur de flux de données va récupérer dans l'espace mémoire du moyen de mémorisation du moyen de gestion de l'imprimante les paramètres de marques de pliage sélectionnés et va modifier à partir du contenu de ces paramètres le contenu du premier fichier intermédiaire d'impression de format image en y insérant les marques de pliage. Par exemple, si les paramètres sont stockés sous forme d'image, ce qui n'est pas toujours le cas, l'insertion peut se faire à l'aide d'instructions telles que copier / coller du contenu d'un fichier image, contenant les paramètres, dans le premier fichier intermédiaire en arrière plan ou en filigrane par rapport au contenu du premier fichier intermédiaire. Une fois le premier fichier intermédiaire modifié, la deuxième conversion et la génération de flux de données, étape (150), sont effectuées par le moyen d'interfaçage graphique (2) et le moyen de génération de flux de données (51). Un deuxième fichier intermédiaire est créé sous un format standardisé de type image, PCL ou Postscript. Le deuxième fichier intermédiaire d'impression comprend les marques de pliage. Puis le procédé d'impression se déroule suivant les étapes (160, 170), comme décrit à la figure 5. Ce mode de réalisation est dédié uniquement lors de l'impression de documents sur des imprimantes fabriquées par la société SAGEM S.A.. L'étape d'insertion de marques de pliage (153) est réalisée au sein même du pilote de l'imprimante. Pour toute autre imprimante, l'accès au fonctionnement du pilote de l'imprimante est impossible, l'insertion de marques de pliage ne pouvant être réalisée selon le premier mode de réalisation.

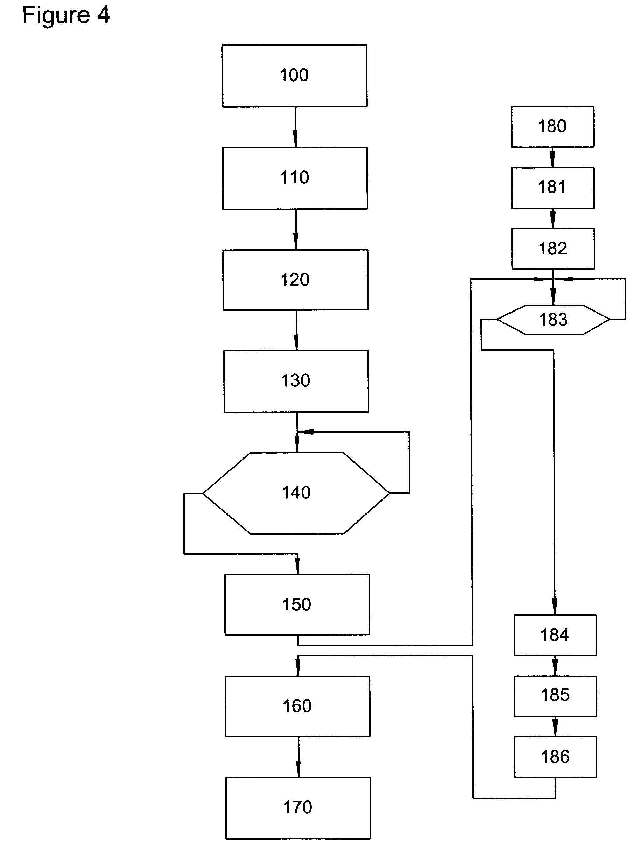

Le deuxième mode de réalisation de l'invention va être à présent décrit en fonction des figures 2 et 4. La figure 2 représente le système d'impression selon le deuxième mode de réalisation. Ce système est très similaire au système présenté en figure 1. Un module de gestion des marques de pliage (7) est présent dans le système d'exploitation. Ce module peut être une application logicielle activée de manière distincte à l'extérieur des applications logicielles d'édition. Le module de gestion de marques de pliage (7) comprend un moyen de paramétrage des marques de pliage (70) et un moyen de supervision (71) de l'insertion des marques de pliage. Le moyen de paramétrage des marques de pliage (70) comprend entre autres un moyen de saisie et de validation du paramétrage et de l'activation des marques de pliage. Ce moyen de saisie peut être représenté par exemple par une fenêtre de paramétrage affichée sur le bureau du système d'exploitation, comportant un onglet d'activation de l'option insertion de marques de pliage et des cadres de saisie ou des menus déroulant permettant de choisir les paramètres souhaités des marques de pliage. Le moyen de supervision de l'insertion des marques de pliage va prendre en compte l'activation ou la désactivation de l'option marque de pliage et va communiquer directement avec le moyen de contrôle du moyen de gestion de l'impression. Dans un mode de réalisation de l'invention, une fois que l'option marque de pliage est activée, toute impression de document demandée par une application logicielle d'édition quelconque, par exemple Word ou Excel, va comporter les marques de pliage. Dans le cas où l'utilisateur ne veut plus l'impression des marques de pliage, il devra désactiver l'option.

La figure 4 représente le fonctionnement du procédé d'impression de marques de pliage selon le deuxième mode de réalisation. Un utilisateur souhaite imprimer un document édité dans un moyen d'édition, avec des marques de pliage. Comme représenté sur la figure 5, l'utilisateur peut régler les paramètres standards de l'impression et les propriétés de l'imprimante directement à partir du moyen de saisie des paramètres d'impression présent dans le moyen d'édition, à l'étape (100). Pour sélectionner l'option d'insertion de marques de pliage dans l'impression du document, l'utilisateur doit activer le module de gestion de marques de pliage (7) qui ouvrira par exemple une fenêtre de saisie et de validation de l'option de marques de pliage, la fenêtre étant indépendante de la fenêtre du logiciel d'édition. Cette étape d'activation (180) est réalisée indépendamment et en parallèle aux étapes du procédé d'impression d'un document, représenté en figure 5. Puis à l'étape (181), le moyen de paramétrage va prendre en compte le réglage des paramètres de l'option d'insertion de marques de pliage et le moyen de supervision, à l'étape (182), va prendre en compte l'activation de l'option d'insertion des marques de pliage. Le module de gestion d'insertion de marques de pliage va activer l'étape d'attente (183) de l'activation de la commande d'impression du document. Dès que la commande d'impression est activée, le procédé exécute les mêmes étapes (100 à 150) identiques aux étapes de la figure 5. Puis, après l'étape (150) de conversion du premier fichier intermédiaire en un second fichier intermédiaire de format standard de type PCL ou PS, le moyen de supervision (71) du module de gestion de marques de pliage (7) récupère, à l'étape (184), le deuxième fichier intermédiaire au format standard qu'il peut lire. Le moyen de gestion lance, à l'étape (185), un programme utilisant des instructions connues de type PCL ou PS afin de lire et d'extraire une partie des données de format, telle que par exemple la position de l'entête et du bas de page du document. Ces données sont nécessaires pour connaître la position par exemple des marges de la page à imprimer pour y insérer les marques de pliage. A l'étape (185), le moyen de supervision modifie le deuxième fichier intermédiaire en y insérant des données représentatives de la forme et de la position des marques de pliage. Une fois la modification réalisée le moyen de supervision renvoie le deuxième fichier intermédiaire modifié vers un moyen interpréteur du moyen de gestion de l'impression. Puis le procédé continue les étapes (160, 170) décrites en figure 5. Ce mode de réalisation permet donc l'insertion des données de marques de pliage en dehors du pilote de l'imprimante permettant ainsi d'imprimer lesdites marques sur toute imprimante connectée à l'ordinateur.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'impression de marques de pliage, réalisé dans un système d'exploitation comprenant au moins un moyen d'édition (1) pour éditer au moins un document, un système d'impression (3) et un moyen d'interfaçage graphique (2), le système d'impression (3) comportant au moins un pilote (5) dédié à une imprimante et un module de supervision de l'impression, le procédé comprenant les étapes suivantes :
- une première étape (100) de réglage et de validation des paramètres propriétaires d'une imprimante par l'intermédiaire d'un moyen de paramétrage (50) d'une imprimante, situé dans le pilote (5) de l'imprimante et en liaison avec un moyen de saisie des paramètres standard et de l'activation d'une impression, du moyen d'édition (1),
- une deuxième étape (120) consistant en une première conversion, par le moyen d'interfaçage graphique (2), du document à imprimer en un premier fichier intermédiaire suivant un format graphique de type EMF ou bitmap, la première conversion ne prenant pas en compte les paramètres de l'imprimante,
- une troisième étape (130) de mémorisation et de mise en file d'attente du premier fichier intermédiaire dans un moyen de mémorisation (41) du moyen de gestion de l'impression (4) du système d'impression (3),
- une quatrième étape (140) de détection de la position du premier fichier intermédiaire en tête de la file d'attente du moyen de mémorisation (41),
- une cinquième étape (150) consistant en une deuxième conversion du premier fichier intermédiaire en un deuxième fichier intermédiaire suivant un format universel de type PCL ou Postscript, prenant en compte les paramètres de l'imprimante, ladite étape (150) étant réalisée par le moyen d'interfaçage graphique (2) en collaboration avec un moyen de génération de flux de données (51) du pilote de l'imprimante (5),
- une sixième étape (160) d'interprétation du flux de données du deuxième fichier intermédiaire par un moyen d'interprétation (42) du moyen de gestion de l'impression (4),
- et une septième étape (170) d'envoi des flux de données interprétés vers un moyen d'interfaçage (43) d'une imprimante,
le procédé étant **caractérisé en ce qu'**il comprend les étapes suivantes :
- une étape (101, 180) d'activation et de paramétrage d'une option d'insertion de marques de pliage réalisée par un module de gestion (6, 7) de l'option d'insertion de marques de pliage relié au moyen de paramétrage (50) du pilote (5),
- une étape d'insertion (153, 185) de marques de pliage dans le deuxième document intermédiaire.

2. Procédé d'impression de marques de pliage, selon la revendication 1, **caractérisé en ce que** l'étape (101) d'activation et de paramétrage d'une option d'insertion de marques de pliage est effectuée lors de la première étape de réglage et de validation (100) des paramètres de propriétés de l'imprimante dans le moyen de saisie des paramètres de l'imprimante et de l'activation d'une (1) impression du moyen d'édition (1).

3. Procédé d'impression de marques de pliage, selon la revendication 1 ou 2, **caractérisé en ce que** l'étape d'insertion de marques de pliage (153) est réalisée dans le moyen de supervision (41) du pilote (4) de l'imprimante lors de l'étape (150) de conversion du premier fichier intermédiaire en un deuxième fichier intermédiaire.

4. Procédé d'impression de marques de pliage, selon la revendication 1, **caractérisé en ce que** l'étape d'activation et de paramétrage d'une option d'insertion des marques de pliage est réalisée indépendamment et en parallèle aux étapes de réglage et de validation des paramètres de propriétés d'une imprimante (100), d'une première conversion (120) du document à imprimer en un fichier intermédiaire, de mémorisation et de mise en file d'attente (130) du premier fichier intermédiaire dans un moyen de mémorisation (41) et de détection (140) de la position du premier fichier intermédiaire en tête de la file d'attente.

5. Procédé d'impression de marques de pliage, selon la revendication 1 ou 4, **caractérisé en ce que** l'étape d'insertion de marques de pliage (185) est réalisée après l'étape de conversion (150) du premier fichier intermédiaire en un deuxième fichier intermédiaire converti en un format universel.

6. Procédé d'impression de marques de pliage, selon une des revendications 1 et 4 ou 5, **caractérisé en ce que** l'insertion de marques de pliage nécessite d'abord une étape de détection des données de mise en page du deuxième fichier intermédiaire et une étape de modification dudit fichier par insertion des marques de pliage.

7. Système d'impression de marques de pliage comprenant au moins un moyen d'édition (1) d'au moins un document, un système d'impression (3) et un moyen d'interfaçage graphique (2) agencé pour permettre des conversions de format successives d'un document à imprimer édité par le moyen d'édition (1), le système d'impression (3) comportant au moins un pilote (5) dédié à une imprimante et un moyen de gestion de l'impression (4), le système d'impression (3) étant **caractérisé en ce qu'**il comprend un module d'activation et de réglage (6, 7) d'une option marque de pliage relié à un moyen de paramétrage (50) situé dans le pilote (5) de l'imprimante, ledit moyen de paramétrage (50) étant du type en liaison avec une interface du moyen d'édition (1) permettant la saisie des paramètres standard et l'activation d'une impression, le module d'activation et de réglage (6, 7) de l'option marque de pliage étant agencé pour insérer des marques de pliage dans un document au format universel de type PCL ou Postscript.

8. Système d'impression de marques de pliage selon la revendication 7, **caractérisé en ce que** le module d'activation et de réglage (6-7) de l'option marque de pliage comprend un moyen de paramétrage des paramètres de marques de pliage (61, 70) et un moyen de supervision de l'insertion des marques de pliage (60, 71).

9. Système d'impression de marques de pliage selon la revendication 7 ou 8, **caractérisé en ce que** le module d'activation et de réglage (6) de l'option marque de pliage est intégré dans le pilote de l'imprimante.

10. Système d'impression de marques de pliage selon la revendication 7 ou 8, **caractérisé en ce que** le module d'activation et de réglage (7) de l'option marque de pliage n'est pas intégré dans le pilote de l'imprimante, le moyen de supervision de l'insertion de marques de pliage ayant un lien avec le module de supervision de la gestion de l'impression du moyen de gestion de l'impression.

11. Système d'impression de marques de pliage selon la revendication 10, **caractérisé en ce que** le module d'activation et de réglage (7) de l'option marque de pliage est un logiciel.

12. Système d'impression de marques de pliage, selon une des revendications 7 à 11, **caractérisé en ce que** le module de supervision de la gestion de l'impression du moyen de gestion de l'impression est un spooler permettant la gestion de file d'attente des documents à imprimer.
